**Europäisches Patentamt**

**European Patent Office**

**Office européen des brevets**

(19)

(11) Veröffentlichungsnummer : **0 139 271**
**B1**

(12) # EUROPÄISCHE PATENTSCHRIFT

(45) Veröffentlichungstag der Patentschrift :
**02.12.87**

(51) Int. Cl.⁴ : **C 08 L 51/04**

(21) Anmeldenummer : **84111997.7**

(22) Anmeldetag : **06.10.84**

(54) **Polymerlegierungen mit matter Oberfläche.**

(30) Priorität : **19.10.83 DE 3337940**

(43) Veröffentlichungstag der Anmeldung :
**02.05.85 Patentblatt 85/18**

(45) Bekanntmachung des Hinweises auf die Patenterteilung : **02.12.87 Patentblatt 87/49**

(84) Benannte Vertragsstaaten :
**DE FR GB IT NL**

(56) Entgegenhaltungen :
**FR-A- 2 518 105**

(73) Patentinhaber : **BAYER AG**
**Konzernverwaltung RP Patentabteilung**
**D-5090 Leverkusen 1 Bayerwerk (DE)**

(72) Erfinder : **Eichenauer, Herbert, Dr.**
**Goethestrasse 71**
**D-4047 Dormagen (DE)**
Erfinder : **Döring, Joachim, Dr.**
**Siiesiusstrasse 78**
**D-5000 Köln 80 (DE)**
Erfinder : **Ott, Karl-Heinz**
**Paul-Klee-Strasse 54**
**D-5090 Leverkusen 1 (DE)**
Erfinder : **Bottenbruch, Ludwig, Dr.**
**Woehlerstrasse 5**
**D-4150 Krefeld (DE)**

**Beschreibung**

Die Erfindung betrifft Polymerlegierungen mit matter Oberfläche auf der Basis von Pfropfpolymerisaten mit basischen und sauren Funktionen.

Polymerlegierungen mit elastisch-thermoplastischen Eigenschaften und matter Oberfläche sind von wachsendem Interesse für Anwendungsbereiche, bei denen hohe Zähigkeit und gleichzeitig Blendfreiheit gefordert werden, so z. B. für Teile im Automobilinnenbereich oder für Geräteabdeckungen.

Bisher wurde versucht, solche Polymerlegierungen durch Einsatz großer Kautschukteilchen (vgl. z. B. US-A 4 169 869) oder Verwendung unvernetzter oder nur schwach vernetzter Kautschuke (vgl. z. B. DE-A 2 057 936) als Pfropfgrundlage der Pfropfpolymerisate herzustellen.

Bei allen diesen Versuchen wird aber die erwünschte Oberflächenbeschaffenheit mit dem Verlust an ebenfalls gewünschten Produktqualitäten wie z. B. Kerbschlagzähigkeit, Härte oder Verarbeitbarkeit erkauft.

Gegenstand der Erfindung sind matte Polymerlegierungen aus

A) 99,95 bis 0,05 Gew.-%, bevorzugt 70 bis 30 Gew.-%, eines Pfropfproduktes eines Gemisches aus 40 bis 99,9 Gew.-Teilen Styrol, $\alpha$-Methylstyrol, p-Methylstyrol, Vinyltoluol, Methylmetracrylat oder Mischungen daraus, 40 bis 0,1 Gew.-Teilen einer vinylgruppenhaltigen, bevorzugt heterocyclischen Stickstoffbase und 0 bis 49 Gew.-Teilen Acrylnitril auf einen teilchenförmigen Kautschuk mit einem mittleren Teilchendurchmesser ($d_{50}$) von 0,05 bis 20,0 $\mu$m und einer Glastemperatur $\leqslant$ 10 °C mit einem Gesamtkautschukgehalt von 5 bis 80 Gew.-% und

B) 0,05 bis 99,95 Gew.-%, bevorzugt 30 bis 70 Gew.-% eines Pfropfproduktes eines Gemisches aus 40 bis 99,9 Gew.-Teilen Styrol, $\alpha$-Methylstyrol, p-Methylstyrol, Vinyltoluol, Methylmetracrylat oder Mischungen daraus, 40 bis 0,1 Gew.-Teilen einer eine polymerisierbare Doppelbindung enthaltenden Mono- oder Disäure bzw. deren Anhydrid und 0 bis 49 Gew.-Teilen Acrylnitril auf einen teilchenförmigen Kautschuk mit einem mittleren Teilchendurchmesser ($d_{50}$) von 0,05 bis 20,0 $\mu$m und einer Glastemperatur $\leqslant$ 10 °C mit einem Gesamtkautschukgehalt von 5 bis 80 Gew.-%.

Bevorzugt sind Mischungen aus

A) 70 bis 30 Gew.-% eines Pfropfproduktes eines Gemisches aus 60 bis 85 Gew.-Teilen Styrol, $\alpha$-Methylstyrol, p-Methylstyrol, Vinyltoluol, Methylmethacrylat oder Mischungen daraus, 30 bis 5 Gew.-Teilen einer vinylgruppenhaltigen, bevorzugt heterocyclischen Stickstoffbase und 10 bis 40 Gew.-Teilen Acrylnitril auf einen teilchenförmigen Kautschuk mit einem mittleren Teilchendruchmesser ($d_{50}$) von 0,1 bis 1,0 $\mu$m und einer Glastemperatur $\leqslant$ 10 °C mit einem Gesamtkautschukgehalt von 30 bis 70 Gew.-% und

B) 30 bis 70 Gew.-% eines Pfropfproduktes eines Gemisches aus 60 bis 85 Gew.-Teilen Styrol, $\alpha$-Methylstyrol, p-Methylstyrol, Vinyltoluol, Methylmethacrylat oder Mischungen daraus, 30 bis 5 Gew.-Teilen einer eine polymerisierbare Doppelbindung enthaltenden Mono- oder Disäure bzw. deren Anhydrid und 10 bis 40 Gew.-Teilen Acrylnitril auf einen teilchenförmigen Kautschuk mit einem mittleren Teilchendurchmesser ($d_{50}$) von 0,1 bis 1,0 $\mu$m und einer Glastemperatur $\leqslant$ 10 °C mit einem Gesamtkautschukgehalt von 30 bis 70 Gew.-%.

Als Pfropfgrundlage für die Pfropfprodukte A) und B) kommen praktisch alle Kautschuke mit Glastemperaturen $\leqslant$ 10 °C in Frage. Beispiele sind Polybutadien, Polyisopren, Styrol-Butadien-Copolymerisate, Acrylnitril-Butadien-Copolymerisate, Acrylatkautschuke, EPM-Kautschuke (Ethylen/Propylen-Kautschuke) und EPDM-Kautschuke (Ethylen/Propylen/Dien-Kautschuke, die als Dien ein nichtkonjugiertes Dien wie z. B. Hexadien-1,5 oder Norbornadien in kleinen Mengen enthalten).

Diese Kautschuke müssen in Form von Teilchen eines mittleren Durchmessers ($d_{50}$) von 0,05 bis 20,0 $\mu$m, bevorzugt von 0,1 bis 2,0 $\mu$m und besonders bevorzugt von 0,1 bis 1,0 $\mu$m vorliegen.

Die Pfropfprodukte A) und B) werden durch Pfropfpolymerisation in Emulsion, Suspension oder Lösung oder durch Kombination dieser Verfahren in an sich bekannter Weise hergestellt.

Sie enthalten 5 bis 80 Gew.-% Kautschuk, insbesondere 20 bis 60 Gew.-%, und weisen Gelgehalte, gemessen in Aceton bei 25 °C, von 30 bis 90 Gew.-%, insbesondere 40 bis 80 Gew.-% auf.

Die Pfropfmonomeren sind Styrol, $\alpha$-Methylstyrol, p-Methylstyrol, Vinyltoluol, Acrylnitril, Methylmethacrylat oder Mischungen daraus, insbesondere Mischungen von Acylnitril mit Styrol.

Die Pfropfprodukte A) und B) werden durch Polymerisation dieser Monomeren in Gegenwart der Dien- oder Acrylatkautschuke hergestellt. Dabei ist zur Herstellung des Pfropfproduktes A) als weitere Monomerkomponente eine polymerisierbare Stickstoffbase (z. B. 2-Vinylpyridin, 3-Vinylpyridin, 4-Vinylpyridin, N-Vinylimidazol, p-Dimethylaminostyrol, 4-Vinylpyrimidin, N-Vinylcarbazol, N-Vinylpyrrol, N-Vinylindol, Dimethylaminoethylmethacrylat bzw. deren Gemische) und für B) eine polymerisierbare Mono- oder Disäure bzw. deren Anhydrid, z. B. Acrylsäure, Methacrylsäure, Maleinsäure, Fumarsäure, Itaconsäure, Crotonsäure, Zimtsäure, Vinylsulfonsäure, Vinylbenzolsulfonsäure bzw. deren Gemische, wobei aliphatische $C_3$-$C_{10}$- oder aromatische $C_9$-$C_{18}$-Mono- oder Dicarbonsäuren bevorzugt sind, erforderlich.

Bei der Herstellung der Pfropfprodukte A) und B) durch Emulsionspolymerisation ist es nötig, bei der Wahl der Emulgatoren auf das saure bzw. basische Monomere Rücksicht zu nehmen. Bei Anwesenheit der sauren Monomeren muß die Polymerisation im sauren Milieu und somit unter Verwendung von Emulgatoren erfolgen, die bei pH-Werten unter 7 noch wirksam sind. Auch bei der Aufarbeitung, d. h. bei der Fällung der Latices muß darauf geachtet werden, daß der saure bzw. basische Charakter der Pfropfpolymerisate erhalten bleibt.

Die erfindungsgemäßen Polymerlegierungen können erhalten werden, indem man ihre Bestandteile A) und B) miteinander bei höheren Temperaturen, insbesondere bei T = 100 °C bis 280 °C, z. B. in Knetern, auf Walzenstühlen oder Schneckenmaschinen mischt. Fallen A) und B) als Suspensionen oder Lösungen an, so kann man diese mischen und gemeinsam aufarbeiten.

Den Legierungen können übliche Additive wie Antioxidantien, Alterungsschutzmittel, Gleitmittel, Flammschutzmittel, Füllstoffe, Pigmente, Antistatika in den üblichen Mengen zugesetzt werden.

Die erfindungsgemäßen Legierungen sind matte flexible thermoplastische Formmassen mit guten Fließeigenschaften bei Verarbeitung durch Extrusion, Kalandrierung und Spritzguß. Sie können zu matten Formkörpern verarbeitet werden, sind aber auch als Modifikatoren für andere Kunststoffe geeignet, insbesondere für Thermoplaste wie Acrylnitril/Butadien/Styrol-Terpolymerisate (ABS), Methylmethacrylat/Butadien/Styrol-Terpolymerisate (MBS), Styrol/Acrylnitril-Copolymerisate (SAN), α-Methylstyrol/Acrylnitril-Copolymerisate, Polystyrol, Polymethylmethacrylat, Polyvinylchlorid, Polycarbonat, Polycarbonat/ABS-Gemische, Polyamide, z. B. Polyamid 6, Polyamid 66, Polyester, z. B. Polyethylenterephthalat, Polybutylenterephthalat. Als « Mattierungsmodifikatoren » dienen bevorzugt solche erfindungsgemäßen Mischungen, die viel Kautschuk — etwa 50 bis 70 % — enthalten. Ihre Menge ist im allgemeinen 5 bis 40 Gew.-% bezogen auf das gesamte modifizierte Produkt.

Eine besonders bevorzugte Mischung dieser Art besteht aus

10-80 Gew.-%, bevorzugt 20-70 Gew.-%, der erfindungsgemäßen matten Polymerlegierung, und

90-20 Gew.-%, bevorzugt 80-30 Gew.-% eines thermoplastischen Harzes aus

5-40 Gewichtsteilen Acrylnitril und 95-60 Gew.-Teilen Styrol, α-Methylstyrol, p-Methylstyrol, Methylmethacrylat oder Gemischen daraus.

Diese Harze sind bekannt. Sie werden häufig als SAN-Harze bezeichnet.

Man kann sie mit dem Gemisch von Pfropfpolymerisaten vereinigen, indem man sie beim Vermischen der Pfropfpolymerisate zugibt. Dabei müssen die Harze in der gleichen physikalischen Form (Feststoff, Latex, Lösung) vorliegen, wie die Pfropfpolymerisate. Man kann natürlich auch feste Harze auf Innenmischernung in Extrudern mit fertigen Mischungen der Pfropfpolymerisate mischen.

<p style="text-align:center">Beispiele und Vergleichsbeispiele</p>

Die folgenden Beispiele erläutern die Erfindung, ohne sie einzuschränken. Die angegebenen Teile sind Gew.-Teile und beziehen sich immer auf Festbestandteile bzw. polymerisierbare Bestandteile.

Herstellung der Pfropfprodukte

In einem Reaktor werden G Teile Kautschukgrundlage (in Form eines Latex mit einem Feststoffgehalt zwischen 35 und 50 Gew.-%) auf 65 °C erwärmt, wonach 0,5 Teile Kaliumpersulfat (gelöst in 20 Teilen Wasser) zugegeben werden. Anschließend werden M Teile des in Tabelle 1 angegebenen Monomerengemischs sowie 2 Teile des in Tabelle 1 aufgeführten Emulgators (gelöst in 25 Teilen Wasser) innerhalb 4 Stunden zudosiert, wobei die Pfropfreaktion erfolgt. Nach einer Nachreaktionszeit wird der Pfropflatex nach der Zugabe von 1,2 Teilen Antioxidantien in einer wäßrigen Magnesiumsulfat/Essigsäurelösung koaguliert. Das resultierende Pulver wird mit Wasser, einer basischen bzw. einer sauren Lösung und nochmals mit Wasser gewaschen und bei 70 °C in Vakuum getrocknet.

<p style="text-align:center">(Siehe Tabelle 1 Seite 4 ff.)</p>

Tabelle 1 : Zusammensetzung und Herstellbedingungen der Pfropfprodukte

| Pfropf-produkt | Pfropfprodukt-typ | Kautschukgrundlage | Mittlere Teilchen-größe | G | Monomere | M | Emulgator |
|---|---|---|---|---|---|---|---|
| 1 | Vergleich | Polybutadienlatex | 0,4 µm | 50 | 72 Styrol<br>28 Acrylnitril | 50 | Natriumsalz der disproportionierten Abietinsäure |
| 2 | Vergleich | Polybutylacrylat-latex | 0,5 µm | 50 | 72 Styrol<br>28 Acrylnitril | 50 | Natriumsalz der disproportionierten Abietinsäure |
| 3 | A | Polybutadienlatex | 0,4 µm | 50 | 65 Styrol<br>25 Acrylnitril<br>10 2-Vinylpyridin | 50 | Natriumsalz der disproportionierten Abietinsäure |
| 4 | B | Polybutadienlatex | 0,4 µm | 50 | 65 Styrol<br>25 Acrylnitril<br>10 Methacrylsäure | 50 | Natriumsalz von $C_{9-18}$-Alkyl-sulfonsäuren |
| 5 | A | Polybutadienlatex | 0,4 µm | 60 | 55 Styrol<br>15 Acrylnitril<br>10 Methylmethacrylat<br>20 N-Vinylimidazol | 40 | Natriumsalz der disproportionierten Abietinsäure |
| 6 | B | Polybutadienlatex | 0,4 µm | 60 | 55 Styrol<br>15 Acrylnitril<br>10 Methylmethacrylat<br>20 Acrylsäure | 40 | Natriumsalz von $C_{9-18}$-Alkyl-sulfonsäuren |

Tabelle I (Fortsetzung)

| Pfropf-produkt | Pfropfprodukt-typ | Kautschukgrundlage | Mittlere Teilchen-größe | G | Monomere | M | Emulgator |
|---|---|---|---|---|---|---|---|
| 7 | A | Polybutylacrylat-latex | 0,5 μm | 50 | 61 Styrol<br>24 Acrylnitril<br>15 4-Vinylpyridin | 50 | Natriumsalz der disproportionier-ten Abietinsäure |
| 8 | B | Polybutylacrylat-latex | 0,5 μm | 50 | 61 Styrol<br>24 Acrylnitril<br>15 Methacrylsäure | 50 | Natriumsalz von $C_{9-18}$-Alkylsul-fonsäuren |

0 139 271

Herstellung und Ausprüfung der Formmassen

P Teile eines Gemisches aus Pfropfprodukt A und Pfropfprodukt B im Gew.-Verhältnis 1 : 1 werden mit H Teilen eines thermoplastischen Harzes und 3 Teilen eines Gleitmittels in einem Kneter miteinander vermischt und anschließend zu Normkleinstäben, einer Platte (zur Oberflächenbeurteilung) und einer Spirale (zur Beurteilung der Fließweglänge) verspritzt. Ein Teil des Materials wurde durch Extrusion zu Platten verarbeitet. Die Kerbschlagzähigkeit wurde bei Raumtemperatur ($a_k^{RT}$) und bei — 40 °C ($a_k^{-40\,°C}$) nach DIN 53 453 (Einheit: $kJ/m^2$), die Kugeldruckhärte ($H_c$) nach DIN 53 456 (Einheit: $N/mm^2$), die Wärmeformbeständigkeit (Vicat B) nach DIN 53 460 (Einheit: °C) und die Fließweglänge bei 220 °C an einer Spirale von ca. 8 mm Breite und ca. 2 mm Stärke (Einheit: cm) gemessen. Die Glanzmessung erfolgte nach DIN 67 530 an einer ebenen Platte bei einem Reflektionswinkel von 60° (Reflektometerwert) mit Hilfe des Mehrwinkel-Reflektometers « Multi-Gloss » der Firma Byk-Mallinckrodt (siehe Tabelle 2).

Als Thermoplastharze werden eingesetzt:

Styrol/Acrylnitril (SAN) = 72 : 28-Copolymerisat mit einem $M_w$ von ca. 80 000,

α-Methylstyrol/Acrylnitril (AMSAN) = 69 : 31-Copolymerisat mit einem $M_w$ von ca. 75 000,

Bisphenol A-Polycarbonat (PC) mit einem $M_w$ von ca. 30 000,

Polymethylmethacrylat (PMMA) mit einem $M_w$ von ca. 110 000,

alle Harze besitzen ein $M_w/M_n$ — 1 ⩽ 2,0.

Siehe Tabelle 2 Seite 7  f.)

Tabelle 2 : Zusammensetzungen und Prüfdaten der Formmassen

| Formmasse | Pfropf-produkte | P | Thermoplasti-sches Harz | H | $a_k$RT | $a_k$-40°C | $H_c$ | Vicat B | Fließ-länge | Reflekto-meter-wert | Aussehen der extru-dierten Platte |
|---|---|---|---|---|---|---|---|---|---|---|---|
| 1 (Ver-gleich) | 1 | 40 | SAN | 60 | 16 | 11 | 86 | 97 | 41 | 78 | glänzend |
| 2 (Ver-gleich) | 2 | 40 | SAN | 60 | 15 | 5 | 85 | 95 | 40 | 80 | glänzend |
| 3 (Ver-gleich) | 3 | 40 | SAN | 60 | 14 | 9 | 86 | 97 | 40 | 75 | glänzend |
| 4 (Ver-gleich) | 4 | 40 | SAN | 60 | 12 | 7 | 87 | 98 | 34 | 25 | matt |
| 5 | 3+4 | 40 | SAN | 60 | 15 | 10 | 91 | 100 | 40 | 15 | matt |
| 6 | 5+6 | 40 | SAN | 60 | 14,5 | 9 | 92 | 102 | 39 | 9 | matt |
| 7 | 7+8 | 40 | SAN | 60 | 14 | 5 | 87 | 97 | 40 | 14 | matt |
| 8 | 3+4 | 35 | AMSAN | 65 | 13 | 6,5 | 87 | 105 | 30 | 19 | matt |
| 9 | 5+6 | 35 | PMMA | 65 | 10 | 5 | 94 | 96 | 33 | 22 | matt |
| 10 | 3+4 | 35 | PC/SAN = 2:1-Gemisch | 65 | 23 | 8 | 82 | 111 | 24 | 16 | matt |

0 139 271

Wie aus Tabelle 2 ersichtlich ist, führt die Abmischung von Pfropfprodukten, die keine basischen oder sauren Monomerkomponenten einpolymerisiert enthalten (Formmassen 1 und 2) ebenso wie die Einbringung eines Pfropfproduktes A alleine (Formmasse 3) in eine Thermoplastmatrix zu keiner matten Oberfläche. Nach Abmischung des Pfropfproduktes B alleine mit dem Thermoplastharz kann zwar eine mattierte Oberfläche beobachtet werden, gleichzeitig treten jedoch ein Abfall der Kerbschlagzähigkeit und eine reduzierte Fließfähigkeit auf (Formmasse 4). Erst bei Einsatz der erfindungsgemäßen Abmischungen aus Pfropfprodukt A und Pfropfprodukt B in einer Thermoplastharz-Matrix (Formmassen 5 bis 10) wird sowohl bei einer Verarbeitung durch Extrusion als auch im Spritzguß eine matte Oberfläche ohne negativen Einfluß auf die sonstigen Eigenschaften erhalten. Außerdem besitzen die erfindungsgemäßen Formmassen eine verbesserte Wärmeformbeständigkeit und eine höhere Härte.

## Patentansprüche

1. Formmassen aus

A) 99,95 bis 0,05 Gew.-% eines Pfropfproduktes eines Gemisches aus 40 bis 99,9 Gew.-Teilen Styrol, $\alpha$-Methylstyrol, p-Methylstyrol, Vinyltoluol, Methylmethacrylat oder Mischungen daraus, 40 bis 0,1 Gew.-Teilen einer vinylgruppenhaltigen, bevorzugt heterocyclischen Stickstoffbase und 0 bis 49 Gew.-Teilen Acrylnitril auf einen teilchenförmigen Kautschuk mit einem mittleren Teilchendurchmesser ($d_{50}$) von 0,05 bis 20,0 $\mu$m und einer Glastemperatur $\leq$ 10 °C mit einem Gesamtkautschukgehalt von 5 bis 80 Gew.-% und

B) 0,05 bis 99,95 Gew.-% eines Pfropfproduktes eines Gemisches aus 40 bis 99,9 Gew.-Teilen Styrol, $\alpha$-Methylstyrol, p-Methylstyrol, Vinyltoluol, Methylmethacrylat oder Mischungen daraus, 40 bis 0,1 Gew.-Teilen einer eine polymerisierbare Doppelbindung enthaltenden Mono- oder Disäure bzw. deren Anhydrid und 0 bis 49 Gew.-Teilen Acrylnitril auf einen teilchenförmigen Kautschuk mit einem mittleren Teilchendurchmesser ($d_{50}$) von 0,05 bis 20,0 $\mu$m und einer Glastemperatur $\leq$ 10 °C mit einem Gesamtkautschukgehalt von 5 bis 80 Gew.-%.

2. Formmassen aus

A) 70 bis 30 Gew.-% eines Pfropfproduktes eines Gemisches aus 60 bis 85 Gew.-Teilen Styrol, $\alpha$-Methylstyrol, p-Methylstyrol, Vinyltoluol, Methylmethacrylat oder Mischungen daraus, 30 bis 5 Gew.-Teilen einer vinylgruppenhaltigen, bevorzugt heterocyclischen Stickstoffbase und 10 bis 40 Gew.-Teilen Acrylnitril auf einen teilchenförmigen Kautschuk mit einem mittleren Teilchendurchmesser ($d_{50}$) von 0,1 bis 1,0 $\mu$m und einer Glastemperatur $\leq$ 10 °C mit einem Gesamtkautschukgehalt von 30 bis 70 Gew.-% und

B) 30 bis 70 Gew.-% eines Pfropfproduktes eines Gemisches aus 60 bis 85 Gew.-Teilen Styrol, $\alpha$-Methylstyrol, p-Methylstyrol, Vinyltoluol, Methylmethacrylat oder Mischungen daraus, 30 bis 5 Gew.-Teilen einer eine polymerisierbare Doppelbindung enthaltenden Mono- oder Disäure bzw. deren Anhydrid und 10 bis 40 Gew.-Teilen Acrylnitril auf einen teilchenförmigen Kautschuk mit einem mittleren Teilchendurchmesser ($d_{50}$) von 0,1 bis 1,0 $\mu$m und einer Glastemperatur $\leq$ 10 °C mit einem Gesamtkautschukgehalt von 30 bis 70 Gew.-%.

3. Formmassen gemäß Anspruch 1 und 2, mit 2-Vinylpyridin oder 4-Vinylpyridin bzw. deren Gemisch als Stickstoffbase.

4. Formmassen gemäß Anspruch 1 und 2, mit Acrylsäure oder Methacrylsäure bzw. deren Gemische als Säure.

5. Formmassen nach Anspruch 1 enthaltend

10-80 Gew.-% der Formmasse gemäß Anspruch 1 und

90-20 Gew.-% eines thermoplastischen Harzes aus 5-40 Gew.-Teilen Acrylnitril und 95-60 Gew.-Teilen Styrol, $\alpha$-Methylstyrol, p-Methylstyrol, Methylmethacrylat oder Gemischen davon.

6. Verfahren zur Herstellung einer thermoplastischen Formmasse mit matter Oberfläche, dadurch gekennzeichnet, daß man ein Gemisch aus 40-99,9 Gew.-Tln. Styrol, $\alpha$-Methylstyrol, p-Methylstyrol, Vinyltoluol, Methylmethacrylat oder Mischungen daraus, 40-0,1 Gew.-Tln. einer vinylgruppenhaltigen bevorzugt heterocyclischen Stickstoffbase und 0 bis 49 Gew.-Teilen Acrylnitril in Gegenwart eines teilchenförmigen Kautschuks mit einem mittleren Teilchendurchmesser ($d_{50}$) von 0,05 bis 20,0 $\mu$m und einer Glastemperatur $\leq$ 10 °C pfropfpolymerisiert, so daß das Pfropfprodukt einen Gesamtkautschukgehalt von 5 bis 80 Gew.-% besitzt, dann ein Gemisch aus 40 bis 99,9 Gew.-Teilen Styrol, $\alpha$-Methylstyrol, p-Methylstyrol, Vinyltoluol, Methylmethacrylat oder Mischungen daraus, 40 bis 0,1 Gew.-Teilen einer eine polymerisierbare Doppelbindung enthaltenden Mono- oder Disäure bzw. deren Anhydrid und 0 bis 49 Gew.-Teilen Acrylnitril auf demselben oder einem anderen teilchenförmigen Kautschuk mit einem mittleren Teilchendurchmesser ($d_{50}$) von 0,05 bis 20,0 $\mu$m und einer Glastemperatur $\leq$ 10 °C pfropfpolymerisiert und die beiden Pfropfpolymerisate vereinigt.

## Claims

1. Moulding compositions of

A) 99.95 to 0.05 % by weight of a graft product of a mixture of 40 to 99.9 parts by weight of styrene. α-methylstyrene, p-methylstyrene, vinyl toluene. methyl methacrylate or mixtures thereof. 40 to 0.1 parts by weight of a vinyl-group-containing, preferably heterocyclic nitrogen base and 0 to 49 parts by weight of acrylonitrile on a particulate rubber having an average particle diameter ($d_{50}$) of 0.05 to 20.0 μm and a glass temperature of ≤ 10 °C, with a total rubber content of 5 to 80 % by weight and

B) 0.05 to 99.95 % by weight of a graft product of a mixture of 40 to 99.9 parts by weight of styrene, α-methylstyrene. p-methylstyrene. vinyl toluene. methyl methacrylate or mixtures thereof. 40 to 0.1 parts by weight of a mono- or di-acid or an anhydride thereof containing a polymerisable double bond and 0 to 49 parts by weight of acrylonitrile on a particulate rubber having an average particle diameter ($d_{50}$) of 0.05 to 20.0 μm and a glass temperature of ≤ 10 °C, with a total rubber content of 5 to 80 % by weight.

2. Moulding compositions of

A) 70 to 30 % by weight of a graft product of a mixture of 60 to 85 parts by weight of styrene. α-methylstyrene, p-methylstyrene, vinyl toluene, methyl methacrylate or mixtures thereof. 30 to 5 parts by weight of a vinyl-group-containing, preferably heterocyclic nitrogen base and 10 to 40 parts by weight of acrylonitrile on a particulate rubber having an average particle diameter ($d_{50}$) of 0.1 to 1.0 μm and a glass temperature of ≤ 10 °C, with a total rubber content of 30 to 70 % by weight and

B) 30 to 70 % by weight of a graft product of a mixture of 60 to 85 parts by weight of styrene. α-methylstyrene, p-methylstyrene, vinyl toluene, methyl methacrylate or mixtures thereof. 30 to 5 parts by weight of a mono- or di-acid or an anhydride thereof containing a polymerisable double bond and 10 to 40 parts by weight of acrylonitrile on a particulate rubber having an average particle diameter ($d_{50}$) of 0.1 to 1.0 μm and a glass temperature of ≤ 10 °C, with a total rubber content of 30 to 70 % by weight.

3. Moulding compositions according to Claim 1 and 2 in which the nitrogen base is 2-vinylpyridine or 4-vinylpyridine or a mixture thereof.

4. Moulding compositions according to Claim 1 and 2, in which the acid is acrylic acid or methacrylic acid or mixtures thereof.

5. Moulding compositions according to Claim 1 containing

10-80 % by weight of the moulding composition according to Claim 1 and

90-20 % by weight of a thermoplastic resin of 5-40 parts by weight of acrylonitrile and 95-60 parts by weight of styrene, α-methylstyrene, p-methylstyrene, methyl methacrylate or mixtures thereof.

6. Process for the production of a thermoplastic moulding composition with a mat surface, characterised in that a mixture of 40-99.9 parts by weight of styrene, α-methylstyrene, p-methylstyrene, vinyl toluene. methyl methacrylate or mixtures thereof, 40-0.1 parts by weight of a vinyl-group-containing, preferably heterocyclic nitrogen base and 0 to 49 parts by weight of acrylonitrile are graft polymerised in the presence of a particulate rubber having an average particle diameter ($d_{50}$) of 0.05 to 20.0 μm and a glass temperature of ≤ 10 °C, such that the graft product has a total rubber content of 5 to 80 % by weight, and then a mixture of 40 to 99.9 parts by weight of styrene, α-methylstyrene, p-methylstyrene, vinyl toluene, methyl methacrylate or mixtures thereof, 40 to 0.1 parts by weight of a mono- or di-acid or an anhydride thereof containing a polymerisable double bond and 0 to 49 parts by weight of acrylonitrile are graft-polymerised on to the same or a different particulate rubber having an average particle diameter ($d_{50}$) of 0.05 to 20.0 μm and a glass temperature of ≤ 10 °C and the two graft polymers are combined.


**Revendications**

1. Matières à mouler de :

A) 99,95 à 0,05 % en poids d'un produit greffé d'un mélange de 49 à 99,9 parties en poids de styrène, d'α-méthylstyrène, de p-méthylstyrène, de vinyltoluène de méthacrylate de méthyle ou de leurs mélanges. 40 à 0,1 partie en poids d'une base azotée, de préférence hétérocyclique, à groupes vinyles et 0 à 49 parties en poids d'acrylonitrile sur un caoutchouc en particules d'un diamètre moyen de particules ($d_{50}$) de 0,05 à 20,0 μm et d'une température de transition vitreuse ≤ 10 °C, d'une teneur totale en caoutchouc de 5 à 80 % en poids et de

B) 0,05 à 99,95 % en poids d'un produit greffé d'un mélange de 40 à 99,9 parties en poids de styrène d'α-méthylstyrène, de p-méthylstyrène, de méthacrylate de méthyle ou de leurs mélanges. 40 à 0,1 partie en poids d'un mono- ou diacide contenant une double liaison polymérisable ou de son anhydride et 0 à 49 parties en poids d'acrylonitrile sur un caoutchouc en particules d'un diamètre moyen de particules ($d_{50}$) de 0,05 à 20,0 μm et d'une température de transition vitreuse ≤ 10 °C d'une teneur totale en caoutchouc de 5 à 80 % en poids.

2. Matières à mouler de :

A) 70 à 30 % en poids d'un produit greffé d'un mélange de 60 à 85 parties en poids de styrène d'α-méthylstyrène, de p-méthylstyrène, de vinyltoluène, de méthacrylate de méthyle ou de leurs mélanges. 30 à 5 parties en poids d'une base azotée, de préférence hétérocyclique, à groupes vinyles et 10 à 40 parties en poids d'acrylonitrile sur un caoutchouc en particules d'un diamètre moyen de particules ($d_{50}$) de 0,1 à 1,0 μm et d'une température de transition vitreuse ≤ 10 °C, d'une teneur totale en caoutchouc de 30 à 70 % en poids et de

B) 30 à 70 % en poids d'un produit greffé d'un mélange de 60 à 85 parties en poids de styrène, d'α-

9

méthylstyrène, de p-méthylstyrène, de vinyltoluène, de méthacrylate de méthyle ou de leurs mélanges, 30 à 5 parties en poids d'un mono- ou diacide contenant une double liaison polymérisable ou de son anhydride et 10 à 40 parties en poids d'acrylonitrile sur un caoutchouc en particules d'un diamètre moyen de particules ($d_{50}$) de 0,1 à 1,0 $\mu$m et d'une température de transition vitreuse $\leqslant$ 10 °C, d'une teneur totale en caoutchouc de 30 à 70 % en poids.

3. Matières à mouler selon les revendications 1 et 2, avec la 2-vinylpyridine ou la 4-vinylpyridine ou leur mélange comme base azotée.

4. Matières à mouler selon les revendications 1 et 2 avec l'acide acrylique ou l'acide méthacrylique ou leurs mélanges comme acide.

5. Matières à mouler selon la revendication 1 contenant

10 à 80 % en poids de la matière à mouler selon la revendication 1, et

90 à 20 % en poids d'une résine thermoplastique de 5-40 parties en poids d'acrylonitrile et 95-60 parties en poids de styrène, d'$\alpha$-méthylstyrène, de p-méthylstyrène, de méthacrylate de méthyle ou de leurs mélanges.

6. Procédé pour la fabrication d'une matière à mouler thermoplastique à surface mate, caractérisé en ce que l'on polymérise par greffage un mélange de 40-99,9 parties en poids de styrène, d'$\alpha$-méthylstyrène, de p-méthylstyrène, de vinyltoluène, de méthacrylate de méthyle ou de leurs mélanges, 40 à 0,1 partie en poids d'une base azotée, de préférence hétérocyclique, à groupes vinyles et 0 à 49 parties en poids d'acrylonitrile en présence d'un caoutchouc en particules d'un diamètre moyen de particules ($d_{50}$) de 0,05 à 20,0 $\mu$m et d'une température de transition vitreuse $\leqslant$ 10 °C, de sorte que le produit greffé ait une teneur totale en caoutchouc de 5 à 80 % en poids, ensuite on polymérise par greffage un mélange de 40 à 99,9 parties en poids de styrène, d'$\alpha$-méthylstyrène, de p-méthylstyrène, de vinyltoluène, de méthacrylate de méthyle ou de leurs mélanges, 40 à 0,1 partie en poids d'un mono- ou diacide contenant une double liaison polymérisable ou de son anhydride et 0 à 49 parties en poids d'acrylonitrile sur le même ou sur un autre caoutchouc en particules d'une dimension moyenne de particules ($d_{50}$) de 0,05 à 20,0 $\mu$m et d'une température de transition vitreuse $\leqslant$ 10 °C et on réunit les deux polymères greffés.